# EUROPÄISCHE PATENTSCHRIFT

(11) **EP 3 841 298 B1**
(45) Veröffentlichungstag und Bekanntmachung des Hinweises auf die Patenterteilung: **11.10.2023**
(21) Anmeldenummer: 19758372.7
(22) Anmeldetag: 20.08.2019
(51) Int. Cl.: F03D 1/06, B29C 70/34, B29C 70/78, B29D 99/00, B29L 31/08

(54) **WINDENERGIEANLAGEN-ROTORBLATT**
WIND TURBINE ROTOR BLADE
PALE DE ROTOR D'ÉOLIENNE

(30) Priorität: 21.08.2018 DE 102018120264
(43) Veröffentlichungstag der Anmeldung: 30.06.2021
(73) Patentinhaber: Wobben Properties GmbH, 26607 Aurich (DE)
(72) Erfinder: RUBNER, Florian, 26607 Aurich (DE); PRESCHER, Johannes, 28199 Bremen (DE); ENGELHARDT, Sebastian, 26605 Aurich (DE)
(74) Vertreter: Eisenführ Speiser
(86) Internationale Anmeldenummer: PCT/EP2019/072221
(87) Internationale Veröffentlichungsnummer: WO 2020/038916

(56) Entgegenhaltungen:
- EP-A1- 3 085 952
- WO-A1-2018/015250
- GB-A- 2 462 307
- KR-B1- 101 520 898
- KR-B1- 101 520 898
- US-A1- 2010 143 146

## Beschreibung

Die vorliegende Erfindung betrifft ein Windenergieanlagen-Rotorblatt sowie eine Windenergieanlage mit einem entsprechenden Rotorblatt.

Windenergieanlagen-Rotorblätter mit einem Flatback-Profil sind hinlänglich bekannt.

US 201010143146 A1 zeigt ein Rotorblatt einer Windenergieanlage mit einem Flatback-Profil. Im Bereich der Rotorblatthinterkante, welcher das Flatback-Profil darstellt, wird ein Endkanteneinleger in Form eines Schaumkörpers vorgesehen, um die Stabilität des Rotorblattes zu verbessern. Auf dem zu der Rotorblattinnenseite hinweisenden Ende des Schaumkörpers wird eine Mehrzahl von Faserschichten aufgebracht. Der Schaumkörper dient als Versteifungskern.

In der prioritätsbegründenden deutschen Patentanmeldung hat das Deutsche Patent- und Markenamt die folgenden Dokumente recherchiert: DE 10 2014 203 936 A1, US 2010/0 143 146 A1, EP 3 018 342 B1, EP 3 085 952 A1 und WO 2018/015 250 A1.

Es ist eine Aufgabe der vorliegenden Erfindung, ein Windenergieanlagen-Rotorblatt mit einem Flatback-Profil vorzusehen, welches effizienter hergestellt werden kann.

Diese Aufgabe wird durch ein Windenergieanlagen-Rotorblatt nach Anspruch 1, durch eine Windenergieanlage nach Anspruch 4 und durch ein Verfahren zur Herstellung eines Windenergieanlagen-Rotorblatts nach Anspruch 5 gelöst.

Somit wird ein Windenergieanlagen-Rotorblatt mit einer Flatback-Hinterkante vorgesehen.

Die Flatback-Hinterkante weist mindestens einen Einleger auf, welcher eine flache Außenseite und eine gekrümmte Innenseite aufweist. Der Einleger kann einen Teil der Hinterkante ausbilden (z. B. als Endkanteneinleger). Die flache Außenseite des Einlegers kann damit die flache Hinterkante des Flatbackprofils ausbilden.

Gemäß einem Aspekt der vorliegenden Erfindung ist die gekrümmte Innenseite des Einlegers derart ausgestaltet, dass eine fasergerechte Verlegung bzw. Drapierung eines Fasergeleges ermöglicht wird.

Gemäß einem weiteren Aspekt der vorliegenden Erfindung wird folgend auf den Einleger das Außenlaminat, eine Preform, optional das Kernmaterial und das Innenlaminat während der Herstellung platziert. Insbesondere im flanschnahen Bereich kann optional auf Kernmaterial verzichtet werden.

Die Erfindung betrifft ebenfalls ein Verfahren zum Herstellen eines Windenergieanlagen-Rotorblattes. Mindestens ein Einleger wird in eine Form zur Herstellung des Windenergieanlagen-Rotorblattes eingelegt. Der Einleger weist eine flache Außenseite und eine gekrümmte Innenseite auf. Eine Preform oder ein Außenlaminat wird auf der gekrümmten Innenseite des Einlegers platziert. Kernmaterial und Innenlaminat können auf der Preform oder dem Außenlaminat platziert werden. Anschließend kann optional ein Vakuuminfusionsverfahren zur Herstellung einer Halbschale für das Windenergieanlagen-Rotorblatt durchgeführt werden.

Die Erfindung betrifft den Gedanken, die aerodynamisch wichtige Ausgestaltung des Flatback-Profils mit einem Endkanteneinleger z. B. in Form eines Schaumkörpers vorzusehen. Die Flatback-Hinterkante wird somit nicht durch Faserverbundgelege, sondern durch einen (Endkanten)Einleger vorgesehen bzw. ausgebildet.

Um eine fasergerechte Herstellung eines Rotorblattes zu ermöglichen, werden somit erfindungsgemäß Geometrien mit einem rechten Winkel an der Innenseite des Einlegers vermieden. Daher werden Mindestkrümmungsradien bei der Geometrie des Rotorblattes eingehalten, um den Lastfluss in diesen Bereichen zu optimieren. Insbesondere bei der Herstellung eines Windenergieanlagen-Rotorblattes mit einem Flatback-Profil (welches typischerweise im Bereich der Hinterkanten einen rechten Winkel aufweist) ist es ansonsten äußerst schwierig, die Fasergelege in die Ecken mit den rechten Winkeln hineinzudrapieren. Dies kann zu einer strukturellen Verschlechterung des Rotorblattes führen. Die Steifigkeiten könnten zwar im Wesentlichen gleich bleiben, aber die Festigkeiten können erheblich beeinträchtigt werden.

Mit dem erfindungsgemäßen Windenergieanlagen-Rotorblatt können Gelege im Bereich der Endkante/Flatback faseroptimal ausgeführt bzw. fasergerecht drapiert werden.

Ferner kann damit eine Reinharz-Ansammlung vermieden werden. Durch das Vorsehen des Schaumeinlegers im Bereich der Hinterkante kann eine scharfe Hinterkante erreicht werden, so dass die aerodynamisch benötigte Form umgesetzt werden kann, ohne dass es negative Auswirkungen hat.

Insbesondere kann eine saubere Abrisskante für die Strömung durch den Schaumeinleger oder einen Endkanteneinleger erreicht werden.

Damit kann ein Windenergieanlagen-Rotorblatt mit einem Flatback-Profil erreicht werden, ohne dass weitere Anbauteile benötigt werden.

Gemäß der Erfindung werden die Einleger, z. B. ein Endkanteneinleger, bereits bei der Herstellung des Rotorblattes mit eingebaut. Alternativ dazu können die Einleger auch nachträglich aufgebracht werden, wenn die Krümmungsradien der Endkante ebenfalls in der Form vorhanden sind.

Mit dem erfindungsgemäßen Windenergieanlagen-Rotorblatt kann ein Kraftfluss innerhalb der Fasergelege optimiert werden (da eine fasergerechte Konstruktion umgesetzt wird). Ferner kann die gewünschte aerodynamische Kontur erhalten bleiben. Des Weiteren kann die ursprüngliche Geometrie des Rotorblattes eingehalten werden, da keine weiteren Anbauteile benötigt werden.

Gemäß einem Aspekt der vorliegenden Erfindung werden die Schaumeinleger bereits bei der Fertigung des Rotorblattes in die Hauptform mit eingebracht.

Damit kann auf einen weiteren Schritt bei der Konfektion des Rotorblattes verzichtet werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Windenergieanlagen-Rotorblattes gemäß einem Aspekt der vorliegenden Erfindung,
- Fig. 3: zeigt eine schematische Schnittansicht eines Windenergieanlagen-Rotorblattes gemäß einem ersten Ausführungsbeispiel,
- Fig. 4: zeigt eine schematische Schnittansicht eines Teils eines Windenergieanlagen-Rotorblattes gemäß einem Ausführungsbeispiel,
- Fig. 5: zeigt eine schematische Schnittansicht eines Windenergieanlagen-Rotorblattes gemäß einem Ausführungsbeispiel bei der Herstellung des Rotorblattes, und
- Fig. 6: zeigt eine perspektivische Schnittansicht von Schaumeinlagen für ein Windenergieanlagen-Rotorblatt gemäß einem Aspekt der vorliegenden Erfindung.

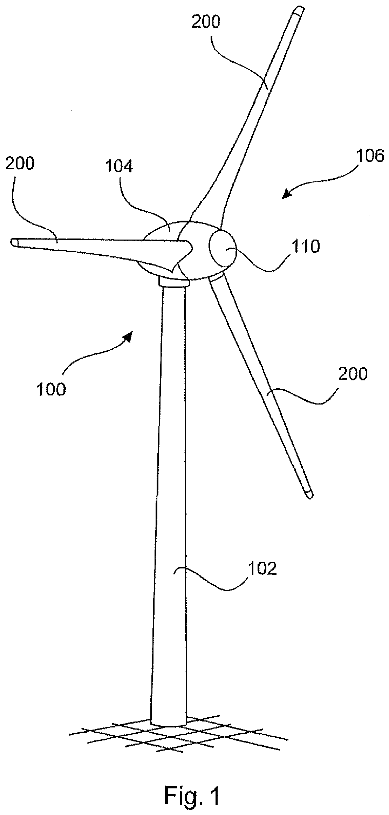

Fig. 1 zeigt eine schematische Darstellung einer Windenergieanlage gemäß der Erfindung. Fig. 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an.

Das Windenergieanlagen-Rotorblatt 200 wird typischerweise durch zwei Halbschalen gebildet, wobei eine Halbschale die Druckseite und die andere Halbschale die Saugseite darstellt. Ferner weist das erfindungsgemäße Windenergieanlagen-Rotorblatt ein Flatback-Profil auf, d.h. die Rotorblatthinterkante ist zumindest teilweise gerade ausgestaltet.

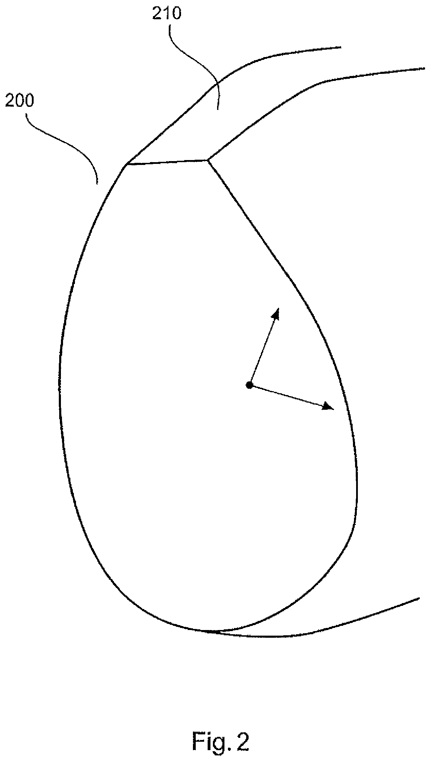

Fig. 2 zeigt eine schematische Schnittansicht eines Windenergieanlagen-Rotorblattes gemäß einem Aspekt der vorliegenden Erfindung. Das Rotorblatt 200 weist dabei ein Flatback-Profil 210, d.h. eine abgeflachte Hinterkante auf.

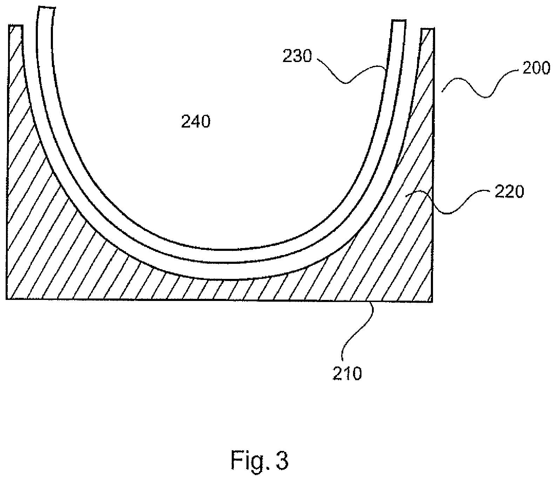

Fig. 3 zeigt eine schematische Schnittansicht eines Windenergieanlagen-Rotorblattes gemäß einem ersten Ausführungsbeispiel. In Fig. 3 ist insbesondere die Endkante bzw. das Flatback 210 des Rotorblattes dargestellt. In Fig. 3 ist der Einleger umlaufend gezeigt. Der Einleger kann jedoch bedingt durch das Herstellungsverfahren auch geteilt ausgeführt sein. In Fig. 3 ist ferner ein Einleger 220 (z. B. ein Endkanteneinleger), eine Laminatschicht 230 sowie eine Preform 240 dargestellt. Alternativ zu einer Preform können auch Festteile (infundiert und getempert) mit eingebracht sein.

Der Einleger 220 kann aus unterschiedlichen Materialien, wie z.B. Balsaholz, PET, PVC oder PU-Schaum hergestellt werden.

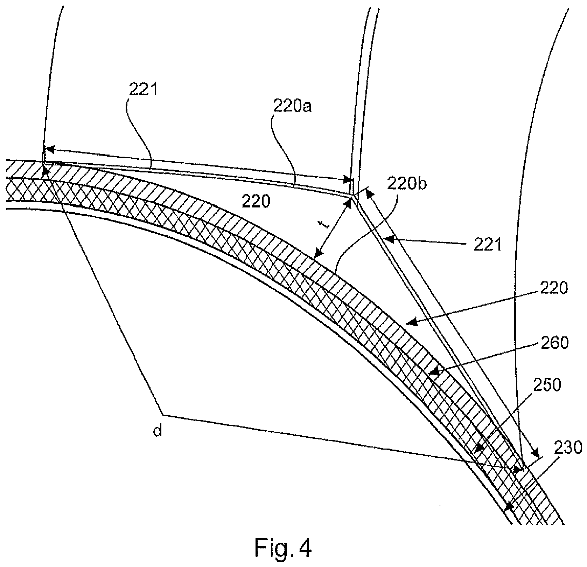

Fig. 4 zeigt eine schematische Schnittansicht eines Teils eines Windenergieanlagen-Rotorblattes 200 gemäß einem weiteren Ausführungsbeispiel der Erfindung. Über dem bzw. an dem Einleger 220 können Abdecklagen 221 vorgesehen sein. Die Innenseite 220b des Einlegers 220 wird gekrümmt ausgestaltet. Auf den Einleger kann das Außenlaminat folgen. Anschließend kann die Preform 260 gelegt werden. Hierauf kann das Kernmaterial 250 folgen und abschließend kann das Innenlamninat 230 anliegen.

Die Einleger 220 sind typischerweise vorgefertigt und weisen an ihrer ersten Seite 220a ein flaches Ende auf, welches dann das Flatback-Profil des Rotorblattes 200 ausbildet bzw. bestimmt oder ausformt. An ihrer zweiten Seite 220b weisen die Schaumeinlagen 220 ein gekrümmtes Profil auf, welches derart ausgestaltet ist, dass die Fasermatten (Gelege oder Gewebe) im Wesentlichen fasergerecht hineingelegt werden können. Die verwendeten Schäume können beispielsweise PET Schäume darstellen. Die Schaumeinleger 220 können in die richtige Form gefräst werden. Alternativ dazu können auch alternative Herstellmethoden realisiert werden wie z. B. eine geschäumte Geometrie oder ein schichtweiser Aufbau,

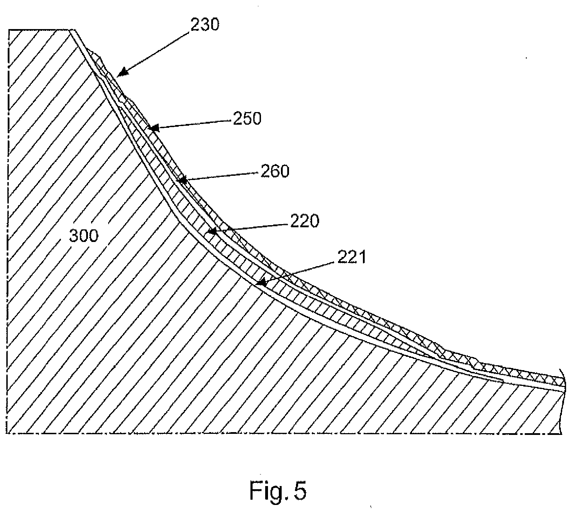

Fig. 5 zeigt eine schematische Schnittansicht eines Windenergieanlagen-Rotorblattes gemäß einem Aspekt der vorliegenden Erfindung bei der Herstellung des Rotorblattes. Zur Herstellung des Rotorblattes 200 werden die Schaumeinlagen 220 in eine Form 300 platziert, anschließend kann optional ein Außenlaminat, eine Preform 260, Kernmaterial 250 und ein Innenlaminat 230 platziert werden. Eine Halbschale wird dann z. B. mittels des Vacuum Assisted Transfer Molding VATM hergestellt. Dies ist vorteilhaft, weil damit Toleranzen oder Ungenauigkeiten in den Einlegern 220 ausgeglichen werden können. Über die Einleger 220 können optional Abdecklagen 221 bei der Herstellung des Rotorblattes vorgesehen sein, welche dann die äußere Oberfläche des Rotorblattes 200 zumindest im Bereich des Flatbacks 210 darstellen können.

Gemäß der Erfindung werden die Einleger während des normalen Herstellungsprozesses des Rotorblattes mit eingebunden, so dass keine zusätzlichen separaten Teile nachträglich an das Rotorblatt eingebaut werden müssen.

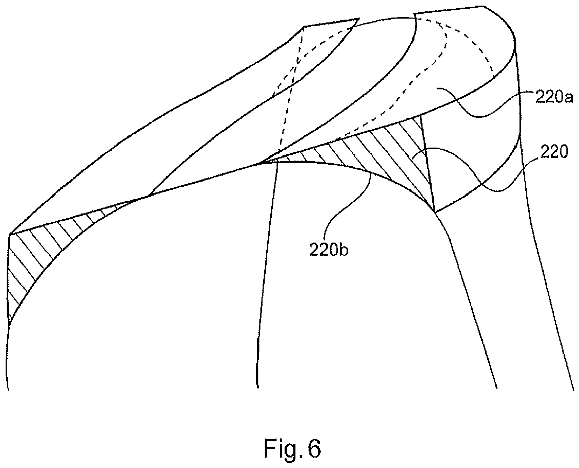

Fig. 6 zeigt eine perspektivische Schnittansicht vom Einleger 220 für ein Windenergieanlagen-Rotorblatt gemäß einem Aspekt der vorliegenden Erfindung. Die Einleger 220 weisen eine Außenseite 220a und eine Innenseite 220b auf. Die Außenseite 220a ist vorzugsweise glatt bzw. flach ausgestaltet, während die Innenseite gekrümmt ausgestaltet ist, um damit eine fasergerechte Verlegung der Fasermatten ermöglichen zu können.

## Patentansprüche

1. Windenergieanlagen-Rotorblatt (200), mit
einer Flatback-Hinterkante (210), wobei die Flatback-Hinterkante (210) mindestens einen Einleger (220) aufweist, welcher eine flache Außenseite (220a) und eine gekrümmte Innenseite (220b) aufweist,
**dadurch gekennzeichnet, dass**
eine Preform (260) oder ein Außenlaminat an der Innenseite (220b) des Einlegers (220) während der Herstellung platziert ist,
wobei ein Kernmaterial (250) und ein Innenlaminat (230) auf der Preform (260) oder dem Außenlaminat platziert ist.

2. Windenergieanlagen-Rotorblatt (200) nach Anspruch 1, wobei
die gekrümmte Innenseite (220b) des Einlegers (220) derart ausgestaltet ist, dass eine fasergerechte Verlegung eines Fasergeleges ermöglicht wird.

3. Windenergieanlagen-Rotorblatt (200) nach einem der Ansprüche 1 oder 2, wobei
der Einleger (220) einen Schaumeinleger, einen Einleger aus Balsaholz oder einen Einleger aus PET, PVC oder PU darstellt.

4. Windenergieanlage mit mindestens einem Windenergieanlagen-Rotorblatt nach einem der Ansprüche 1 bis 3.

5. Verfahren zum Herstellen eines Windenergieanlagen-Rotorblattes (200), insbesondere nach einem der Ansprüche 1 bis 4, wobei das Rotorblatt ein Flatback-Profil (210) aufweist, mit den Schritten:
Platzieren mindestens eines Einlegers (220) in eine Form zur Herstellung des Windenergieanlagen-Rotorblattes (200),
wobei der mindestens eine Einleger (220) eine flache Außenseite (220a) und eine gekrümmte Innenseite (220b) aufweist,
Platzieren einer Preform (260) oder eines Außenlaminats auf die gekrümmte Innenseite (220b) des Einlegers (220),
Platzieren von Kernmaterial (250) und Innenlaminat (230) auf der Preform (260) oder eines Außenlaminats, und
Durchführen eines Vakkuuminfusionsverfahrens zur Herstellung einer Halbschale für das Windenergieanlagen-Rotorblatt (200).

## Claims

1. A wind turbine rotor blade (200) comprising
a flatback trailing edge (210), wherein the flatback trailing edge (210) has at least one insert (220) which has a flat outside (220a) and a curved inside (220b),
**characterized in that** a preform (260) or an outer laminate is placed at the inside (220b) of the insert (220) during production,
wherein a core material (250) and an inner laminate (230) is placed on the preform (260) or the outer laminate.

2. A wind turbine rotor blade (200) according to claim 1 wherein
the curved inside (220b) of the insert (220) is of such a configuration that laying of a fibre mat in the correct fibre relationship is made possible.

3. A wind turbine rotor blade (200) according to one of claims 1 or 2 wherein
the insert (220) represents a foam insert, an insert of balsa wood or an insert of PET, PVC or PU.

4. A wind turbine comprising at least one wind turbine rotor blade according to one of claims 1 to 3.

5. A method of producing a wind turbine rotor blade (200), in particular according to one of claims 1 to 4, wherein the rotor blade has a flatback profile (210), comprising the steps:
placing at least one insert (220) in a mould for the production of the wind turbine rotor blade (200),
wherein the at least one insert (220) has a flat outside (220a) and a curved inside (220b),
placing a preform (260) or an outer laminate on the curved inside (220b) of the insert (220),
placing core material (250) and inner laminate (230) on the preform (260) or an outer laminate, and
carrying out a vacuum infusion method for the production of a half-shell for the wind turbine rotor blade (200).

## Revendications

1. Pale de rotor d'éolienne (200), avec
un bord de fuite arrière à dos plat (210), dans laquelle le bord de fuite arrière à dos plat (210) présente au moins un insert (220), lequel présente un côté extérieur plat (220a) et un côté intérieur incurvé (220b),
**caractérisée en ce que**
une préforme (260) ou un stratifié extérieur est placée ou placé pendant la fabrication sur le côté intérieur (220b) de l'insert (220),
dans laquelle un matériau central (250) et un stratifié intérieur (230) sont placés sur la préforme (260) ou le stratifié extérieur.

2. Pale de rotor d'éolienne (200) selon la revendication 1, dans laquelle
le côté intérieur incurvé (220b) de l'insert (220) est configuré de telle manière qu'une pose conforme aux fibres d'une structure fibreuse est rendue possible.

3. Pale de rotor d'éolienne (200) selon l'une quelconque des revendications 1 ou 2, dans laquelle
l'insert (220) constitue un insert en mousse, un insert en bois de balsa ou un insert en PET, PVC ou PU.

4. Eolienne avec au moins une pale de rotor d'éolienne selon l'une quelconque des revendications 1 à 3.

5. Procédé pour fabriquer une pale de rotor d'éolienne (200), en particulier selon l'une quelconque des revendications 1 à 4, dans lequel la pale de rotor présente un profil à dos plat (210), avec les étapes :
de placement d'au moins un insert (220) dans un moule pour la fabrication de la pale de rotor d'éolienne (200),
dans lequel l'au moins un insert (220) présente un côté extérieur plat (220a) et un côté intérieur incurvé (220b),
de placement d'une préforme (260) ou d'un stratifié extérieur sur le côté intérieur incurvé (220b) de l'insert (220),
de placement du matériau central (250) et du stratifié intérieur (230) sur la préforme (260) ou un stratifié extérieur, et
de mise en œuvre d'un procédé d'infusion sous vide pour fabriquer une demi-coque pour la pale de rotor d'éolienne (200).
